Europäisches Patentamt

European Patent Office

Office européen des brevets

(11) Publication number: **0 093 171**
**B1**

(12) **EUROPEAN PATENT SPECIFICATION**

(45) Date of publication of patent specification: **02.05.85**

(21) Application number: **83901207.7**

(22) Date of filing: **05.11.82**

(86) International application number:
**PCT/DK82/00099**

(87) International publication number:
**WO 83/01587 11.05.83 Gazette 83/11**

(51) Int. Cl.⁴: **B 23 D 61/00, B 27 B 33/02**

(54) **A CUTTING MACHINE TOOL AND A METHOD FOR ITS PRODUCTION.**

(30) Priority: **06.11.81 DK 4909/81**

(43) Date of publication of application:
**09.11.83 Bulletin 83/45**

(45) Publication of the grant of the patent:
**02.05.85 Bulletin 85/18**

(84) Designated Contracting States:
**AT BE CH DE FR GB LI LU NL SE**

(56) References cited:
**DE-A-1 628 891**
**NO-C- 45 267**
**SE-B- 411 722**
**US-A-4 201 103**
**US-A-4 270 429**

(73) Proprietor: **Slagteriernes Forskningsinstitut**
**Maglegaardsvej 2**
**DK-4000 Roskilde (DK)**

(72) Inventor: **HANSEN, Niels Erik**
**Teglgardsvej 45**
**DK-2920 Charlottenlund (DK)**
Inventor: **FENSVIG, Andreas Toft**
**Lundtoftevej 271**
**DK-2800 Lyngby (DK)**

(74) Representative: **Bayliss, Geoffrey Cyril et al**
**BOULT, WADE & TENNANT 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a cutting machine tool which is provided with a number of cutting edges.

When cutting machine tools are used, a strong noise is often emitted which is initiated by the impulse loads set up when the single cutting edges move into engagement. Not only is the noise a nuisance to the surrounding people, but it may also injure the operator's hearing. For example, bacon factories use a circular saw called a back bone saw which, when measured at the operator's ear, provides a noise level of 100 to 105 dB(A) which is considerably higher than the value which the authorities normally permit an operator to be exposed to for a prolonged period of time.

Various methods have been proposed for reducing the noise emitted by sawing machines; for example, a circular saw blade can be clamped between rubber flanges, the vibration of the blade thus being reduced. Another known method of noise reduction is to provide the blade with slits close to its periphery so that the propagation of vibrations in the blade is impeded. The known noise reduction methods are usually insufficient separately since they only reduce the noise level by a few dB. Methods will have to be combined mutually. However, a combination is not always possible or sufficient for reducing the noise nuisances to an acceptable level.

The object of the present invention is to produce a cutting tool constructed so that compared to known tools of the same kind it causes lower noise nuisances. It should also be possible to obtain this reduction of the noise nuisances even if the noise of the tool has been suppressed in some other way, e.g. by lamination or slitting.

This effect is obtained by the tool according to the invention which is characteristic by the specification of the characterizing clause of claim 1.

The advantage as regards noise obtained by random placing or leaving out of a cutting edge is that the noise will be distributed over many different frequencies which, among others, include the different engagement frequencies and multiples thereof. The noise will thus remind of a so-called "white-noise".

The distance between the separate cutting edges of an ordinary cutting machine tool is constant, and so the cutting edges will engage consecutively at one engagement frequency when the tool is moved at a constant speed. Such a tool will cause a noise which by and large is concentrated on the engagement frequency and multiplies thereof.

In other words, using the tool according to the invention makes it possible

— to lower the A-weighted noise level since part of the noise is moved to frequency ranges where the noise is not so irritating or harmful and/or where the noise emission is limited by a larger mechanical damping or by similar means, and
— to render the noise less unpleasant and harmful by reducing or avoiding pure tones in the frequency range where the ear is most sensitive, and by adapting the noise frequencies to the hearing sensitiveness of the ear.

Any sequence consisting of random binary numerals may be used as a basis for the tool according to the invention, in which sequence the order of binaries "1" and "0" is statistically random, but the statistic extremes of e.g. a sequence consisting exclusively of "0" or "1" are, however, of no practical interest, just as very short sequences with few such as 2—3 numerals or consisting of such a short series of numerals repeated several times, must be regarded as useless.

In an embodiment of the tool according to the invention the cutting edges are placed as stated in claim 2. The advantage of uniform sections being obtained in this way is that the cutting edges may be sharpened on ordinary automatic grinding machines. Furthermore, the tool according to the invention may thus be made easily from an ordinary tool where all the cutting edges have the said minimum distance and where the cutting edges corresponding to "0" are simply removed, cf. claims 9 and 10.

Because of a wide distribution of the engagement frequencies, it is preferred according to claim 3 that sequences should be used which include many and at any rate no less than four numerals.

A simple way of obtaining a limited sequence of binary numerals with characteristics almost like those of white noise, is to use a so-called "PRBS sequence" such as stated in claim 4. PRBS stands for "Pseudo Random Binary Signal". There are methods by means of which it is possible to set up such a sequence so that the order of "0" and "1" is close to the order which, on an average, will be found in infinitely many sequences formed at random with the same number of numerals. For a PRBS m-sequence (maximum length sequence) the result is a reproducible sequence with $2^n-1$ numerals where n is a positive whole numeral.

The embodiment of the tool according to the invention stated in claim 5 has proved to produce a satisfactory combination of noise damping and cutting effectiveness in the tool.

The noise nuisances of the working tool may be reduced further by the embodiment stated in claim 8. If it appears, for example, that the engagement frequency corresponding to the sequence section lies in the most sensitive hearing range, some of the cutting edges may be removed whose distance to the following cutting edge is the section, or they may be placed in areas with a larger distance between the cutting edges. It is, however, most expedient, already at production of the random sequence, to ensure a smaller frequency of e.g. closely arranged cutting edges and a correspondingly larger frequency of cutting edges which are located e.g. at 2—3 times the distance which may, among others, be obtained by the use of non-reproducible sequences selected at random, possibly in the form of PRBS sequences.

With the embodiment stated in claim 6 it is possible to obtain a further damping of noise maxima in the higher frequency range. It may, in a simple way, be obtained by means of the embodiment according to claim 7.

The invention also relates to a method of producing the tool stated in claim 2, and according to claim 9 this method is characteristic in that a considerable number of the cutting edges is removed at random from a tool with uniformly spaced cutting edges. According to claim 10 preferably at least one fourth is removed and not more than three fourths of the cutting edges are removed.

The tool according to the invention is used for cutting machining of e.g. wood, glass, metal, plastic, meat with bone and gristle, and similar materials and may with special advantage be used with high-speed tools where the engagement frequency would be of the order of 1,000 to 10,000 Hz.

The invention is described in greater detail below in connection with the drawing where

Fig. 1 shows an embodiment of a circular saw blade for use in a back bone saw for carcasses, and

Fig. 2 the noise spectrum from a back bone saw provided with this blade during sawing (solid curve) as well as the noise spectrum from a known back bone saw where the teeth are distributed uniformly along the periphery (dotted curve).

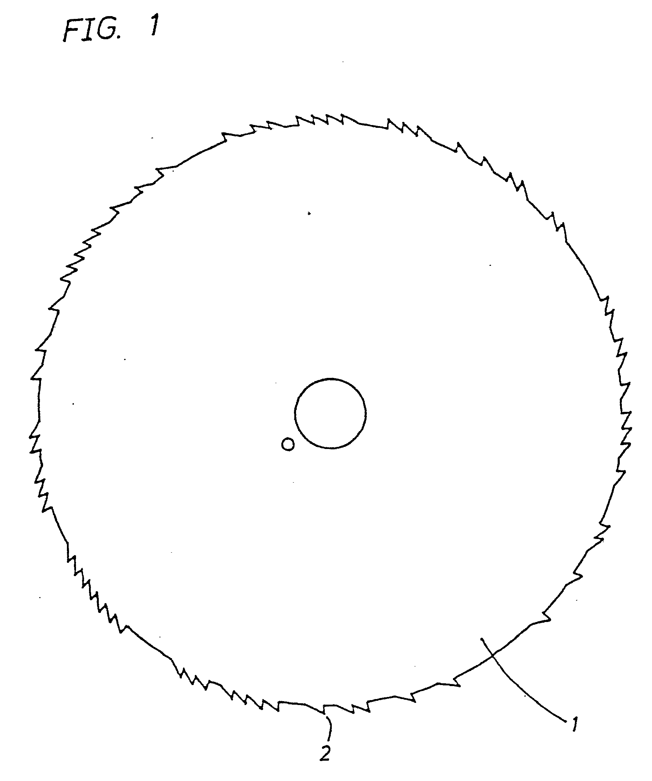

In Fig. 1, 1 denotes a circular saw blade made on the basis of a normal blade with 127 teeth 2 and consisting of a steel disc 1 mm thick and with a diameter of approx. 220 mm. 63 teeth have been removed from the blade in accordance with the "0"s in the following PRBS series with n=7.

1001 0011 0100 1111 0111 0000 1111 1110 0011
1011 0001 0100 1011 1110 1010 1000 0101 1011
1100 1110 0101 0110 0110 0000 1101 1010 1110
1000 1100 1000 1000 000

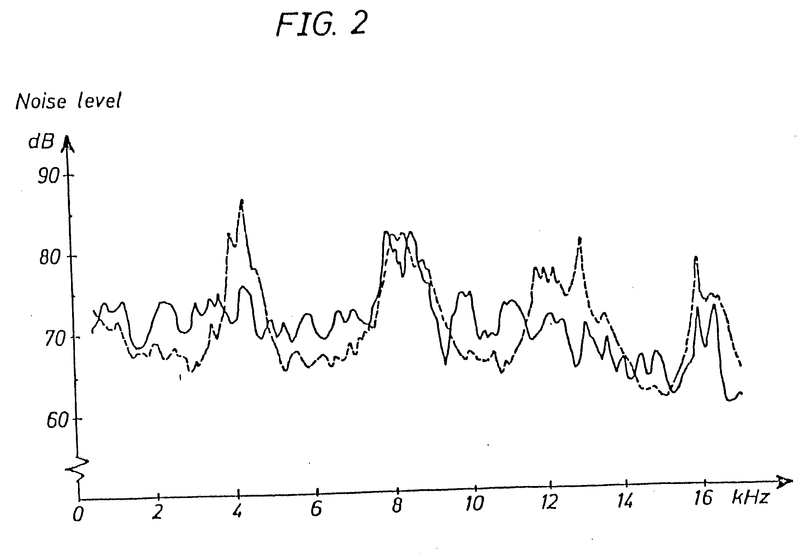

During recording of the curves shown in Fig. 2 the saw blades are clamped between two 60 mm dia. flanges in a normal back bone saw rotating the blade at a speed of approx. 4000 rev./min. The curve in solid line shows the noise spectrum of the circular saw blade according to the invention. The curve in dotted line is recorded for a known 64-tooth blade with the same distance between the teeth.

It can be seen from noise spectra of the two circular saw blades that the PRBS blade in question has the following advantages

— the dB(A) level is 1—2 dB lower,
— the noise peak at approx. 4 kHz has disappeared, and the noise is, therefore, less irritating to the ear which is most sensitive around this frequency.

The noise peak at approx. 8 kHz is not very irritating to the ear since it is not very sensitive at this frequency.

If desired, this noise peak could, however, be reduced by also shifting the cutting edges in a random way so that the distance between the front edges of the cutting edges is not a multiple of one fixed distance. It may be done, for example, by constructing the complete cutting length as 128 units and then adding 1/64 to the section of each cutting edge.

**Claims**

1. A cutting machine tool which has a number of cutting edges, characterized in that the cutting edges are placed on the tool in accordance with a sequence consisting of random binary numerals so that the cutting length of the tool is divided into a number of sections corresponding to the number of numerals of the sequence, and that for each binary "1" of the sequence there is a cutting edge on the appertaining section on the tool, while binary "0" represents absence of a cutting edge on the section.

2. A tool as claimed in claim 1, characterized in that the cutting edges are placed at mutual distances which are equal to the shortest distance between two cutting edges on the tool or multiples thereof.

3. A tool as claimed in claim 1—2, characterized in that the cutting edges are placed in accordance with a sequence comprising at least four numerals and preferably at least 10 numerals.

4. A tool as claimed in claims 1—3, characterized in that the cutting edges are placed in accordance with substantially one or more composite. Pseudo Random Binary Signal (PRBS) sequences.

5. A tool as claimed in claims 1—4, characterized in that the cutting edges are placed in accordance with sequences in which at least one fourth and at the most three fourths of the numerals are binary "1", while the remaining numerals are "0".

6. A tool as claimed in claims 1 and 3—5, characterized in that the cutting edges are placed at mutual distances which are different from multiples of one fixed distance.

7. A tool as claimed in claim 6, characterized in that the sections corresponding to a binary "1" are uniformly longer or shorter than the section corresponding to "0".

8. A tool as claimed in claims 1—7, characterized in that the cutting edges are placed in accordance with sequences in which the row of binary numerals are weighted in such a way that there are more of such cutting edges where the distance to a following cutting edge assumes values which correspond to an engagement frequency to which the ear is insensitive, and proportionally fewer of such other cutting edges where the distance to a following cutting edge assumes definite other values which corresponds to engagement frequencies to which the ear is sensitive.

9. A method of making the tool as claimed in claims 2—5 and 8, characterized in that a considerable number of the cutting edges is removed at random from a tool with cutting edges uniformly spaced.

10. A method as claimed in claim 9, characterized that at least one fourth is removed and at the most three fourths of the cutting edges are removed.

## Patentansprüche

1. Ein Schneidemaschinenwerkzeug, welches eine Anzahl von Schneidekanten aufweist, dadurch gekennzeichnet, daß die Schneidekanten auf dem Werkzeug entsprechend einer Folge plaziert werden, die aus Zufallsbinärzahlen besteht, so daß die Schneidelänge des Werkzeuges in einer Anzahl von Abschnitten entsprechend der Anzahl der Zahlen der Folge aufgeteilt wird, und daß für jede binäre "1" der Folge eine Schneidekante auf dem zugehörigen Abschnitt auf dem Werkzeug vorhanden ist, während binäres "0" das Fehlen einer Schneidekante auf dem Abschnitt darstellt.

2. Ein Werkzeug nach Anspruch 1, dadurch gekennzeichnet, daß die Schneidekanten in gegenseitigen Abständen plaziert sind, welche gleich dem kürzesten Abstand zwischen zwei Schneidekanten auf dem Werkzeug oder Vielfachen davon sind.

3. Ein Werkzeug nach Anspruch 1—2, dadurch gekennzeichnet, daß die Schneidekanten entsprechend einer Folge plaziert sind, welche mindestens vier Zahlen und vorzugsweise 10 Zahlen enthält.

4. Ein Werkzeug nach Ansprüchen 1—3, dadurch gekennzeichnet, daß die Schneidekanten in Übereinstimmung mit im wesentlichen einer oder mehreren zusammengesetzten Pseudozufallsbinärsignal (PRBS)-Folgen plaziert sind.

5. Ein Werkzeug nach Ansprüchen 1—4, dadurch gekennzeichnet, daß die Schneidekanten in Übereinstimmung mit Folgen plaziert sind, in welchen mindestens 1/4 und höchstens 3/4 der Zahlen binäre "1" sind, während die verbleibenden Zahlen "0" sind.

6. Ein Werkzeug nach Ansprüchen 1 und 3—5, dadurch gekennzeichnet, daß die Schneidekanten in gegenseitigen Abständen plaziert sind, welche von Vielfachen eines bestimmten Abstandes verschieden sind.

7. Ein Werkzeug nach Anspruch 6, dadurch gekennzeichnet, daß die Abschnitte entsprechend einer binären "1" einheitlich länger oder kürzer als der Abschnitt entsprechend der "0" sind.

8. Ein Werkzeug nach Ansprüchen 1—7, dadurch gekennzeichnet, daß die Schneidekanten in Übereinstimmung mit Folgen plaziert sind, in welchen die Reihe der Binärzahlen derart gerichtet ist, daß mehr solcher Schneidekanten vorhanden sind, wo der Abstand zu einer nachfolgenden Schneidekante Werte annimmt, welche einer Eingriffsfrequenz entsprechen, für welche das Ohr unempfindlich ist, und proportional weniger solch anderer Schneidekanten vorhanden sind, wo der Abstand zu einer nachfolgenden Schneidekante bestimmte andere Werte annimmt, welche den Eingriffsfrequenzen entsprechen, für welche das Ohr empfindlich ist.

9. Ein Verfahren zur Herstellung des Werkzeuges nach den Ansprüchen 2—5 und 8, dadurch gekennzeichnet, daß eine erhebliche Anzahl von Schneidekanten zufällig von dem Werkzeug mit einheitlich beabstandeten Schneidekanten entfernt ist.

10. Ein Verfahren nach Anspruch 9, dadurch gekennzeichnet, daß mindestens 1/4 entfernt ist und höchstens 3/4 der Schneidekanten entfernt sind.

## Revendications

1. Outil de machine de coupe comportant un certain nombre d'arêtes de coupe, caractérisé en ce que les arêtes de coupe sont placées sur l'outil suivant une séquence consistant en des nombres binaires répartis au hasard de telle sorte que la longueur de coupe de l'outil est divisée en un certain nombre de sections correspondant au nombre de chiffres de la séquence, et en ce que pour chaque nombre binaire "1" de la séquence, il y a une arête coupante sur la section correspondante de l'outil, tandis que le nombre binaire "0" représente l'absence d'une arête coupante sur la section.

2. Outil selon la revendication 1, caractérisé en ce que les arêtes de coupe sont placées à des distances mutuelles qui sont égales à la plus courte distance entre deux arêtes de coupe sur l'outil ou un des multiples de celle-ci.

3. Outil selon l'une des revendications 1 et 2, caractérisé en ce que les arêtes de coupe sont placées suivant une séquence comprenant au moins quatre chiffres et de préférence au moins dix chiffres.

4. Outil selon les revendications 1 à 3, caractérisé en ce que les arêtes de coupe sont placées suivant une ou plusieurs séquences composite(s) de signaux binaires répartis suivant un pseudo-hasard.

5. Outil selon les revendications 1 à 4, caractérisé en ce que les arêtes de coupe sont placées suivant des séquences dans lesquelles au moins un quart et au plus trois quarts des chiffres sont le nombre binaire "1", tandis que les chiffres restant sont "0".

6. Outil selon les revendications 1 et 3 à 5 caractérisé en ce que les arêtes de coupe sont placées à des distances mutuelles qui sont différentes de multiples d'une distance fixée.

7. Outil selon la revendication 6, caractérisé en ce que les sections correspondant à un nombre binaire "1" sont uniformément plus longues ou plus courtes que la section correspondant à "0".

8. Outil selon les revendications 1 à 7, caractérisé en ce que les arêtes de coupe sont placées suivant des séquences dans lesquelles la rangée de nombre binaires sont pondérés de telle façon qu'il y a davantage de telles arêtes de coupe là ou la distance jusqu'à une arête de coupe suivante prend des valeurs qui correspondent à une fréquence d'engagement à laquelle l'oreille est insensible, et proportionnellement un nombre inférieur de telles autres arêtes de coupe là ou la distance jusqu'à l'arête de coupe suivante prend d'autres valeurs définies qui correspondent à des fréquences d'engagement auxquelles l'oreille est sensible.

9. Procédé de fabrication de l'outil selon les revendications 2 à 5 et 8, caractérisé en ce qu'un nombre considérable des arêtes de coupe est enlevé au hasard d'un outil dont les arêtes de coupe sont uniformément espacées.

10. Procédé selon la revendication 9, caractérisé en ce qu'au moins un quart des arêtes de coupe est enlevé et au maximum trois quarts des arêtes de coupe sont enlevés.

FIG. 1

FIG. 2

Noise level